# EUROPEAN PATENT SPECIFICATION

(11) **EP 1 295 495 B1**
(45) Date of publication and mention of the grant of the patent: **01.06.2005**
(21) Application number: 01962730.6
(22) Date of filing: 11.06.2001
(51) Int. Cl.: H04Q 7/32, H04M 1/00, H04M 3/42

(54) **COMMUNICATIONS METHOD AND DEVICE**
KOMMUNIKATIONSVERFAHREN UND GERÄT
PROCEDE ET DISPOSITIF DE COMMUNICATIONS

(30) Priority: 30.06.2000 GB 0016155; 11.07.2000 US 217026 P
(43) Date of publication of application: 26.03.2003
(73) Proprietor: Telefonaktiebolaget LM Ericsson (publ), 164 83 Stockholm (SE)
(72) Inventor: WENDELRUP, Heino, SE-217 41 Malmö (SE)
(74) Representative: O'Connell, David Christopher
(86) International application number: PCT/EP2001/006593
(87) International publication number: WO 2002/001891

(56) References cited:
- EP-A- 0 781 067
- WO-A-00/49821
- US-A- 5 687 216
- US-A- 5 903 845
- PATENT ABSTRACTS OF JAPAN vol. 2000, no. 19, 5 June 2001 (2001-06-05) & JP 2001 043245 A (ALCATEL), 16 February 2001 (2001-02-16)

## Description

### TECHNICAL FIELD OF THE INVENTION

This invention relates to a mobile communications device, and in particular to a device which can communicate over a network such as a mobile radio communications network.

### BACKGROUND OF THE INVENTION

It is necessary to store information, for use with mobile communication devices. For example, mobile phones typically include phone book functions, which allow a user to store frequently dialled numbers, so that they can be accessed, without requiring the user to remember the numbers.

A device such as a mobile phone includes an internal memory, which can store information of this type.

Mobile phones which operate in the GSM system also have Subscriber Identity Module (SIM) cards, which can also be used to store information of this type.

It is also known to provide additional memory in the form of a memory card or a memory stick, in particular for use with a mobile communications device in the form of a personal digital assistant (PDA).

Further, in the case of mobile phones which are enabled to access networks using the wireless application protocol (WAP), it is possible to download large files, for example images or sound files compressed using the MP3 format.

It is known to provide a MP3 player, which can plug into a mobile phone, and provides the storage capacity for files compressed in that format.

As mobile communication devices become more able to access the internet, it becomes more useful for them to be able to store large files. However, it is relatively expensive to provide memory in these formats. Moreover, it is relatively inconvenient for the user, either to have to carry a separate storage medium, or to have a storage device connected permanently to the mobile communications device.

US-5,687,216 discloses a cellular mobile terminal, having an internal memory for storing received messages, and also having a removable external memory for alternatively storing received messages.

US-5,903,845 discloses a personal communications device, which allows a user to store updated subscriber profile data in a telecommunications network.

### SUMMARY OF THE INVENTION

According to one aspect of the present invention, data can be stored from a mobile communications device over a mobile communications network to a remote storage device.

This allows the user to have access to increased storage capacity, in a convenient way.

In one preferred embodiment of the invention, when a user stores data, he is not informed whether it is stored on the communications device itself, or on a separate memory device connected thereto, or on a remote storage device accessed over the communications network.

This has the advantage that the user need not be concerned with the storage requirements.

In one preferred embodiment of the invention, the mobile communications device is connected to a communications network in such a way that it has a permanent connection. For example, the device may be connected to the network using the General Packet Radio System (GPRS).

This has the advantage that data can be stored to, or retrieved from, a remote storage device accessed over the network at any time, without the necessity to establish a connection specifically for the storage or retrieval.

### BRIEF DESCRIPTION OF DRAWINGS

Figure 1 is a block schematic diagram of a system in accordance with an aspect of the present invention.
Figure 2 is an illustrative example of a screen display used during implementation of the present invention.
Figure 3 is an illustrative representation of a second screen display presented during the implementation of the invention.
Figure 4 is an illustrative representation of a third screen display presented during implementation of the invention.
Figure 5 is an illustrative representation of a fourth screen display presented during implementation of the invention.

### DETAILED DESCRIPTION OF PREFERRED EMBODIMENTS

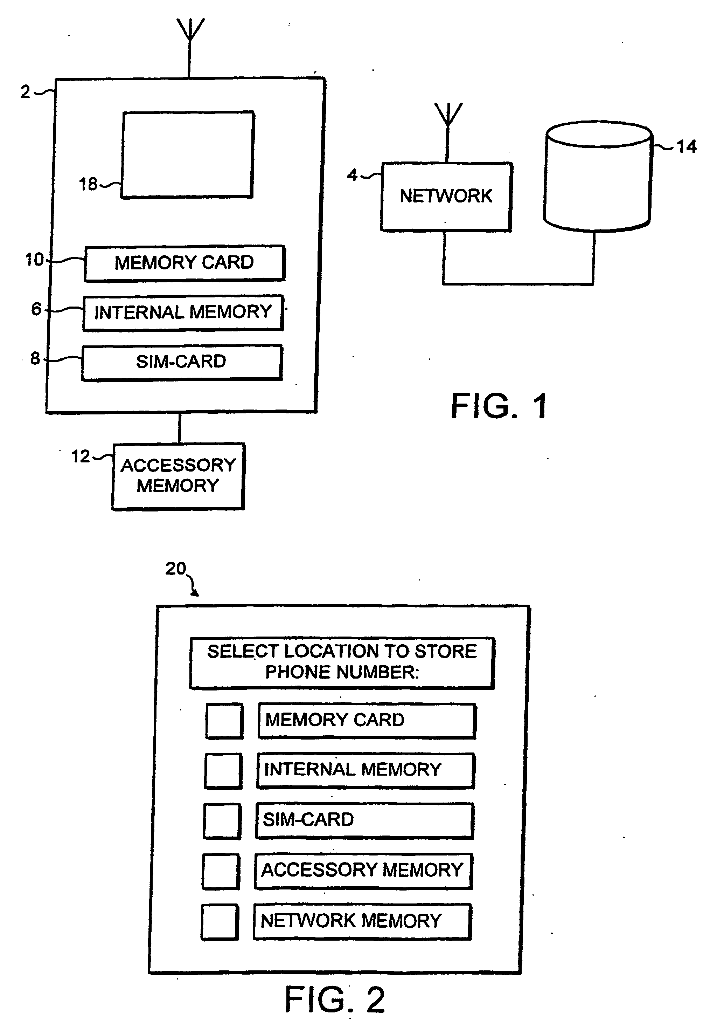

Figure 1 shows a system in accordance with the invention. A portable mobile communications device 2, such as a mobile phone, personal digital assistant (PDA), electronic organizer, or communicator device, is in contact over a mobile network 4. The network 4 may be a cellular or satellite radio network, for example.

In accordance with aspects of the invention, a user of the device 2 has different options available for storing information. For example, the user may wish to store personal information such as diary entries; information relating to use of the device 2, such as a list of frequently used phone numbers; information in the form of SMS or e-mail messages received on the device 2; or other data files, such as image files or MP3-format compressed sound files, which may for example have been downloaded over the network 4 using the device 2.

In this example, the options available to the user for storing this information include the internal memory 6 of the device 2, which may for example be in the form of flash memory or EEPROM; a SIM-card 8; or a memory card 10, which can be connected to the device 2 to increase the available memory thereof. Similarly, a smart media card or memory stick can similarly be connected to the device 2 to increase its available storage capacity.

Another available option for information storage is a memory which forms part of an accessory 12. For example, a mobile phone may have a MP3 player as an available accessory therefor, and this device will include memory for storing files in MP3 format, as well as for decompressing such files in a playback mode.

In accordance with aspects of the present invention, a user of the device 2 also has the option of storing information on a memory server 14, which is located remote from the device 2, and can be accessed over the network 4. For example, the server 14 may be similar to conventional file servers used in data networks, and may form part of a network infrastructure provided by a mobile communications service provider.

The network 4 is preferably a General Packet Radio System (GPRS) network, or other network of a type in which a user has a permanent connection. This allows the user to store information to the memory server 14 over the network 4, or to retrieve information from the memory server 14 over the network 4, at any time, without needing to set up a call.

The device 2 has a display 18, which may be of a conventional type, and Figure 2 shows the text provided on the display 18, in one implementation of the invention. When a user indicates that he wishes to store a phone number, he is presented with a screen display 20, which lists the available storage locations, and invites the user to select the location at which he wishes to store the phone number. In the illustrative example of Figure 2, the user is presented with a list which includes a memory card 10, internal memory 6 of the phone, SIM card 8, accessory memory 12, and memory server 14. However, it will be appreciated that not all of these options need be available.

When a user selects one of the storage locations, the input phone number is then stored at the selected location.

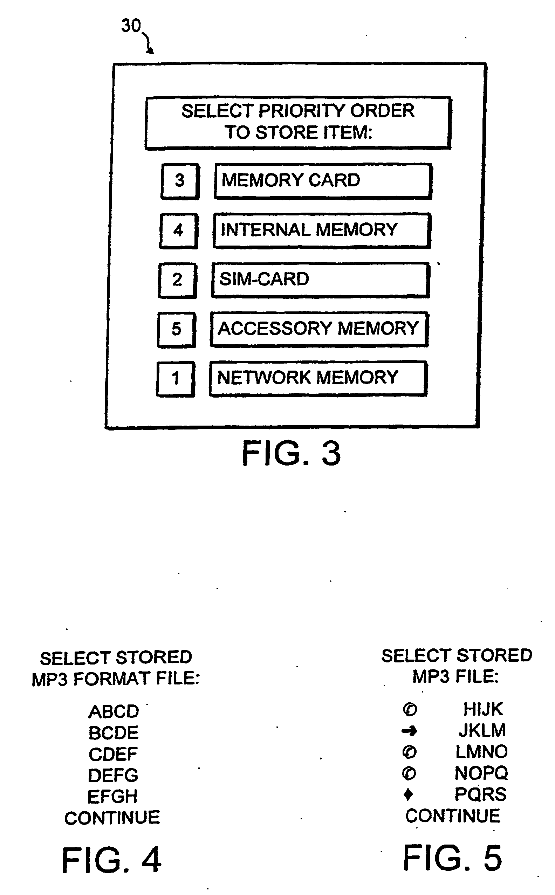

Figure 3 shows a screen display 30 which can be provided to the user on the display 18 of the device 2, in an alternative implementation of the invention. In this case, the user is presented with the same list of available storage locations, for example when he first attempts to store any item of information on first use of the device 2. In this case, however, the user is invited to select a priority order for storage of information.

In the example of Figure 3, the user has selected a priority order in which the network memory server 14 is his first selection, the SIM card 8 is his second preference, and so on.

Thereafter, whenever the user selects any option to store any item of information, a controller within the device 2 attempts to store that item of information to a storage location selected from the preference list. However, it may be the case that a selected storage location is unavailable, for example because there is no available connection over the network to allow use of the network memory device, or because the storage location has no available storage capacity, for example in the case of an internal memory or a SIM card, or because the selected location is an accessory memory and no accessory is connected to the device. In that situation, the information is stored not at the storage location which is the first preference selected by the user, but is instead stored at the storage location which is the next available highest preference.

Advantageously, having made a preference list of storage locations, the user does not need to be informed of which storage location is used for the storage of any specific piece of information. Moreover, if the user has a permanent connection to the network, then, when he is retrieving information, he does not need to know whether he is retrieving that information from a storage location on his device, or from a remote location over the network.

Aspects of the invention also relate to the retrieval of information which may have been stored in any one of multiple locations. Again, in accordance with the preferred embodiments of the invention, the user does not need to know where information is stored, in order to be able to retrieve it.

For example, a user may wish to store his personal list of frequently used telephone numbers. In accordance with the invention, some of these numbers may be stored on the phone itself, or on a SIM-card which is usually present in the phone, while others may be stored on a separate device, for example a network storage device.

Advantageously, the phone is able to recall stored information from wherever it is stored, and present this information to the user in a helpful way. For example, the controller of the phone is programmed such that, when scrolling down an alphabetical list of stored telephone numbers, it can form the list by searching all of the available memory locations, retrieving the next required item of stored information, and reintegrating the items into a single alphabetical list.

Similarly, a phone user may wish to access a file in MP3 format, to play on an MP3 player provided as a detachable accessory for the phone. In that case, the controller of the phone is able to access MP3 format files which have been stored for example on a network storage device, on a separate memory device such as a memory card, or on the MP3 player itself, and the user may be presented with a scrollable list of available files. The user will therefore not need to know where a selected file is stored.

Figure 4 shows a screen display presented to a user, after he has indicated that he wishes to retrieve a file in MP3 format. The screen display lists the available files, or as many of the available files can be shown on the display at one time, and the user is invited either to select one of them, for example by clicking a cursor on the selected item, or to continue showing more of the available items.

The screen display does not identify the storage locations of the respective items. Further, the screen display does not identify the sources of the available items.

Figure 5 shows an alternative form of screen display which may be presented to a user, after he has indicated that he wishes to retrieve a file in MP3 format. Again the screen display lists the available files, or as many of the available files can be shown on the display at one time, and the user is invited either to select one of them, for example by clicking a cursor on the selected item, or to continue showing more of the available items.

In this case, however, displayed with each listed file there is.an icon which identifies the storage location of the file. For example, in this case, symbol **→** can indicate that file JKLM is stored on the MP3 player itself, symbol 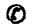 can indicate that files HIJK, LMNO and NOPQ are stored on a remote network server, while symbol ◆ can indicate that file PQRS is stored on a memory card which is at present attached to the communications device.

Again, in a similar way, a phone user may wish to access a file in MPEG or other video compression format, to play a video clip on a video player provided as a detachable accessory for the phone. In that case, the controller of the phone is able to access MPEG format files which have been stored for example on a network storage device, on a separate memory device such as a memory card, or on the MPEG player itself, and the user may be presented with a scrollable list of available files. Thus, again, the user will not need to know where a selected file is stored.

Again, alternatively, the list may indicate the storage locations of the files.

The invention has been described above with reference to the storage of information by a user of a mobile communications device, and the retrieval of such information. However, the invention also provides the possibility that the network storage device 14, described above with reference to Figure 1, may contain stored information which is provided by a central source, and is accessible by multiple users.

For example, an organisation may place its internal telephone directory on a memory server, and make that accessible to all members of that organisation. Then, when a member of the organisation accesses the network through his mobile phone, he is identifiable as a member of the organisation. That person then has access to personal telephone numbers which he has stored, and which might have been stored on the phone or on the SIM-card or on the network storage device as described above, and also to the telephone numbers of members of the organisation, those numbers having been stored centrally on the network. Again, the user can be presented with a scrollable list of numbers which includes all of the numbers from the different sources, without the user needing to know who input the information, or where it had been stored.

Alternatively, the list may indicate the source of the information and/or its storage location.

In the same way, a user can gain access to centrally stored data files of any type.

A network provider can make a charge for storing and/or accessing files on a network memory server, and a mobile phone account can be used as a method of payment for such access charges.

There is therefore provided a system which allows information to be stored in different locations, and retrieved from such locations, while appearing transparent to the user. That is, the user does not need to know which storage location is used.

## Claims

1. A method of storing information from a mobile communications terminal, for later retrieval by a user of said mobile communications terminal, comprising:
in response to an indication by the user that he wishes to store the information, determining a storage location; and
storing the information to said storage location,
**characterized in that** the storage location is selected, based on predetermined criteria, from a storage location in said mobile communications terminal and a storage location accessible from said mobile communications terminal over a mobile communications network.

2. A method as claimed in claim 1, the method comprising, in response to the indication by the user that he wishes to store the information,
presenting to the user a list of available storage locations, the available storage locations including at least one storage location in said terminal and at least one storage location accessible over the mobile communications network; and
determining a preferred storage location selected by the user.

3. A method as claimed in claim 1, the method comprising:
presenting to a user a list of available storage locations, the available storage locations including at least one storage location in said terminal and at least one storage location accessible over a mobile communications network; and
storing an order of preference of said storage locations, selected by the user; and,
in response to the indication by the user that he wishes to store the information;
selecting a storage location, based on the order of preference selected by the user.

4. A method as claimed in claim 2 or 3, comprising:
selecting a first preferred storage location selected by the user, if sufficient storage is available there; and
selecting a second preferred storage location selected by the user, if insufficient storage is available at the first preferred storage location.

5. A method as claimed in claim 2 or 3, wherein the available storage locations further include at least one storage location in an accessory connected to said terminal.

6. A method as claimed in any preceding claim, wherein the mobile communications network is a cellular mobile communications network.

7. A method as claimed in any preceding claim, wherein the mobile communications network is a GPRS network.

8. A mobile communications device, adapted to store information in accordance with a method as claimed in any preceding claim.

## Patentansprüche

1. Verfahren zum Speichern von Informationen von einem mobilen Kommunikationsendgerät zum späteren Wiederauffinden durch einen Benutzer dieses mobilen Kommunikationsendgeräts, welches Folgendes umfasst:
Bestimmen eines Speicherplatzes als Reaktion auf eine Angabe durch den Benutzer, dass er die Informationen speichern möchte; und
Speichern der Informationen auf diesem Speicherplatz, **dadurch gekennzeichnet, dass** der Speicherplatz basierend auf vorbestimmten Kriterien von einem Speicherplatz in diesem mobilen Kommunikationsendgerät und einem Speicherplatz, auf den von diesem Kommunikationsendgerät über ein mobiles Kommunikationsnetz zugegriffen werden kann, ausgewählt wird.

2. Verfahren nach Anspruch 1, wobei das Verfahren als Reaktion auf die Angabe durch den Benutzer, dass er die Informationen speichern möchte, Folgendes umfasst:
Präsentieren einer Liste von verfügbaren Speicherplätzen für den Benutzer, wobei die verfügbaren Speicherplätze mindestens einen Speicherplatz in diesem Endgerät und mindestens einen Speicherplatz, auf den über das mobile Kommunikationsnetz zugegriffen werden kann, umfassen; und
Bestimmen eines durch den Benutzer ausgewählten bevorzugten Speicherplatzes.

3. Verfahren nach Anspruch 1, wobei das Verfahren Folgendes umfasst:
Präsentieren einer Liste von verfügbaren Speicherplätzen für den Benutzer, wobei die verfügbaren Speicherplätze mindestens einen Speicherplatz in diesem Endgerät und mindestens einen Speicherplatz, auf den über ein mobiles Kommunikationsnetz zugegriffen werden kann, umfassen; und
Speichern einer durch den Benutzer ausgewählten Präferenzreihenfolge dieser Speicherplätze; und
als Reaktion auf die Angabe durch den Benutzer, dass er die Informationen speichern möchte;
Auswählen eines Speicherplatzes basierend auf der durch den Benutzer ausgewählten Präferenzreihenfolge.

4. Verfahren nach Anspruch 2 oder 3, welches Folgendes umfasst:
Auswählen eines ersten durch den Benutzer ausgewählten bevorzugten Speicherplatzes, wenn dort ausreichender Speicherplatz verfügbar ist; und
Auswählen eines zweiten durch den Benutzer ausgewählten bevorzugten Speicherplatzes, wenn am ersten bevorzugten Speicherplatz kein ausreichender Speicherplatz verfügbar ist.

5. Verfahren nach Anspruch 2 oder 3, wobei die verfügbaren Speicherplätze des Weiteren mindestens einen Speicherplatz in einem mit diesem Endgerät verbundenen Zubehör umfassen.

6. Verfahren nach einem der vorhergehenden Ansprüche, wobei das mobile Kommunikationsnetz ein zellulares mobiles Kommunikationsnetz ist.

7. Verfahren nach einem der vorhergehenden Ansprüche, wobei das mobile Kommunikationsnetz ein GPRS-Netz ist.

8. Mobiles Kommunikationsgerät, das angepasst ist, um Informationen gemäß einem wie in einem der vorhergehenden Ansprüche beanspruchten Verfahren zu speichern.

## Revendications

1. Procédé de stockage d'informations à partir d'un terminal mobile de communications, pour récupération ultérieure par un utilisateur dudit terminal mobile de communications, comprenant :
en réponse à une indication par l'utilisateur qu'il souhaite stocker les informations, la détermination d'une position de stockage ; et
le stockage des informations à ladite position de stockage,
**caractérisé en ce que** la position de stockage est sélectionnée, sur la base de critères prédéterminés, entre une position de stockage dans ledit terminal mobile de communications et une position de stockage accessible depuis ledit terminal mobile de communications par un réseau de communications mobiles.

2. Procédé selon la revendication 1, le procédé comprenant, en réponse à une indication par l'utilisateur qu'il souhaite stocker les informations, la présentation à l'utilisateur d'une liste de positions disponibles de stockage, les positions disponibles de stockage comprenant au moins une position de stockage dans ledit terminal, et au moins une position de stockage accessible par le réseau de communications mobiles ;
la détermination d'une position de stockage préférée sélectionnée par l'utilisateur.

3. Procédé selon la revendication 1, le procédé comprenant :
la présentation à l'utilisateur d'une liste de positions disponibles de stockage, les positions disponibles de stockage comprenant au moins une position de stockage dans ledit terminal et au moins une position de stockage accessible par un réseau de communications mobiles ; et
le stockage d'un ordre de préférence desdites positions de stockage, sélectionné par l'utilisateur ; et
en réponse à l'indication par l'utilisateur qu'il souhaite stocker les informations ;
la sélection d'une position de stockage sur la base de l'ordre de préférence sélectionné par l'utilisateur.

4. Procédé selon la revendication 2 ou 3, comprenant :
la sélection d'une première position préférée de stockage sélectionnée par l'utilisateur, si un stockage suffisant y est disponible ; et
la sélection d'une seconde position préférée de stockage sélectionnée par l'utilisateur, si un stockage suffisant n'est pas disponible dans la première position préférée de stockage.

5. Procédé selon la revendication 2 ou 3, dans lequel les positions disponibles de stockage comprennent en outre au moins une position de stockage dans un accessoire connecté audit terminal.

6. Procédé selon l'une quelconque des revendications précédentes, dans lequel le réseau de communications mobiles est un réseau cellulaire de communications mobiles.

7. Procédé selon l'une quelconque des revendications précédentes, dans lequel le réseau de communications mobiles est un réseau GPRS.

8. Dispositif de communications mobiles, adapté au stockage d'informations selon un procédé tel que revendiqué dans l'une quelconque des revendications précédentes.
